# EUROPEAN PATENT APPLICATION

(11) **EP 4 699 496 A1**
(43) Date of publication of application: **25.02.2026**
(21) Application number: 25196249.4
(22) Date of filing: 15.08.2025
(51) Int. Cl.: A47G 25/14, B60R 11/00, A47G 25/54

(54) **METHOD AND APPARATUS WITH INNER BLOCKING MESH FOR DRYING WETSUITS WITHIN A CAR**

(30) Priority: 18.08.2024 IL 31506124
(71) Applicant: Living in Sunshine LLC, Los Angeles, CA 91304 (US)
(72) Inventor: Zimmerman, Lior, 4691500 Rishpon (IL); Lavion, Amit, 4059100 Bet Yehoshua (IL)
(74) Representative: Lapienis, Juozas

(57) **Abstract**

A method and apparatus for drying a water suit within a passenger cabin of a car that includes a casing, a drain sleeve, and an inner blocking mesh. The casing includes a front waterproof sheet and a back mesh sheet and accommodates a hanger for the water suit. The casing is suspended by a hanging strip. The drain sleeve is configured to be positioned between the passenger door and the chassis to enable water and moisture to pass from the sleeve to outside the car. The inner blocking mesh is attached to the casing or to the drain sleeve to prevent parts of the suit from falling into the drain sleeve to eliminate possibility of the passenger door failing to closed properly and to ensure unimpeded passage of water and moisture through the drain sleeve to the outside of the car.

## Description

### FIELD OF THE INVENTION

The present invention refers to a method and apparatus for hanging and drying a water suit as it hangs in a passenger cabin of a car that includes an inner blocking mesh.

### BACKGROUND ART

There are advertisements for bags for hanging and drying wet items that can be hung on the handle on the ceiling of the car and a lower sleeve that protrudes from the car to help with drying. The problem with these bags is that parts of the wet items fall into the sleeve when the user opens the rear door of the car, and when he closes it, then the door does not close properly because some of the item (usually a wetsuit sleeve) falls into the sleeve located between the door and the chassis, and then the door either does not close well on the sleeve, or it closes but water and moisture cannot exit through the sleeve because the item intended for drying blocks the passage. Also, when hanging the bag on the handle on the ceiling of the car, whenever a passenger needs to get off, it is necessary to remove the bag from the upper handle, in order to allow the passenger to leave the passenger compartment or if the driver needs to put or take something from the back seat. The present invention discloses an excellent apparatus that solve these problems and others.

### DESCRIPTION OF THE DRAWINGS

The intention of the drawings attached to the application is not to limit the scope of the invention and its application. The drawings are intended only to illustrate the invention and they constitute only one of its many possible implementations.
FIG. 1 depicts the casing (1) and the drain sleeve (6).
FIG. 2 depicts the casing (1) when is opened.
FIGS 3 and 4 depict the hanger (90).
FIG. 5 is a cross sectional view of the hanger (90).
FIG. 6 depicts the car (200).
FIG. 7 depicts the car door (2020).
FIG. 8 depicts the hanging element.

### THE INVENTION

The objective of the present invention is to provide an apparatus (10) for hanging and drying a water suit (100) as it hangs in a passenger cabin (201) of a car (200). The term "water suit" in this disclosure and in the claims refers to clothes that people uses when they do water activities such as surf suits, diving suits, swimming suits, towels, and the like. The apparatus (10) includes a casing (1), a drain sleeve (6), and an inner blocking mesh (5).

The casing (1) is designed to receive the water suit and comprises a front waterproof sheet (2) and a back mesh sheet (3) that is connected to the front waterproof sheet along at least a peripheral portions (21) (31) of said sheets by a fastening means (4). The term "front" in connection with the sheet, comes to express that this is the side that faces into the passenger compartment. The front waterproof sheet should be sealed against water penetration so that objects and people sitting in the car compartment do not get wet in the event that there is a wet water suit inside the casing. The term "back" in connection with the back mesh sheet, comes to express that this is the side facing the car door. It is desirable that the back mesh sheet be made of a synthetic material so that no smell is created upon contact with the water. The goal is to enable the passage of air into the casing and outside of the casing, in order to help the wet water suit hanged inside the casing to dry.

The back mesh sheet (3) is connected to the front waterproof sheet (2) along the peripheral portions (21) (31) of the sheets by the fastening means (4). For example, it is possible for the top and sides of the sheets to be connected together, by means of the fastening means to enable the user to open and close the casing, and it is possible that the lower part of the back mesh sheet will include a continuation of waterproof sheet that will be connected to the mesh, and it is possible that the continuing sheet will be sewn to the front waterproof sheet or be connected to it integrally. The fastening means may be any kind of means that used to close and open sheets and casings such as, buttons and loops, Velcro, loops and hooks.

The casing is designed to receive a hanger (90) for hanging the water suit when it is inside the casing. The hanger (90) and the casing are suspended by a hanging strip (91) that comes out of the casing through an upper hole (81). Instead of an upper hole, it is possible, for example, that the hanging strip will be attached to the upper wall of the casing, and the hanger will be attached from the inside to the its inner upper wall.

The drain sleeve is connected to the bottom portion (11) of the casing and is terminates in a bottom drain opening (61) through which the water and moisture can exit from the drain sleeve. The drain sleeve is configured to be positioned between the passenger door (202) of the car and the chassis (203) of the car when the apparatus is in use. The drain sleeve includes an inner element (62), such as a rigid or semi-rigid rod that is designed to create a gap between a sealing rubber (204) of the passenger door and the chassis for enabling the water and the moisture to pass from the drain sleeve to outside the car through the bottom drain opening while the passengers door is closed on the drain sleeve.

One of the most important element of the present invention is the inner blocking mesh that is attached to the casing or to the drain sleeve to prevent parts (101) of the wet water suit (mainly the sleeves) from falling into the drain sleeve while enabling the water and the moisture to pass from the casing into the drain sleeve. The prevention of the water suits parts from entering the drain sleeve is designed to eliminate possibility of the passenger door failing to close properly and to ensure unimpeded passage of water and moisture through the drain sleeve to the outside of the car.

In another embodiment of the invention the apparatus (10) further includes the hanger (90) that includes an upper rod (92) and lower rod (93). The upper rod is designed to be connected to the hanging strip, used to suspend the apparatus within the passenger compartment, and includes a hanging rail (94). The lower rod includes hanging hooks (95) that enable the lower rod to be hung on the hanging rail, so that enabling the user to remove the lower rod from the casing, place the water suit on the lower rod, and to hang the lower rod together with the water suit on the upper rod by attaching the hanging hooks to the hanging rail.

In another embodiment of the present invention the apparatus (10) is designed to be hanged on a vertical niche (205) on the inner side of the car door. In this case, the hanging strip (91) includes a hanging element (911) that is designed to be hanged on the passenger door, and this element may be for example a hook in a shape having three sides, like a square without one side, in such a way that it will be possible to hang this hanging element on the socket in the door handle of the car.

The present invention also refers to a method for drying the wet water suit within the passenger cabin of the car by providing the apparatus (10) that comprises the casing (1) and the drain sleeve (6), providing the hanging element (911) configured to be hung on the vertical niche on the inner side of the passenger door, when the hanging element is connected to the hanging strip (91), placing the wet water suit on the hanger inside the casing, hanging the apparatus on the vertical niche on the inner side of the passenger door, and placing the drain sleeve between the passenger door and the chassis when the passenger door is opened and closing the passenger door on the drain sleeve. The method may be in a way that the apparatus will also include the inner blocking mesh (5).

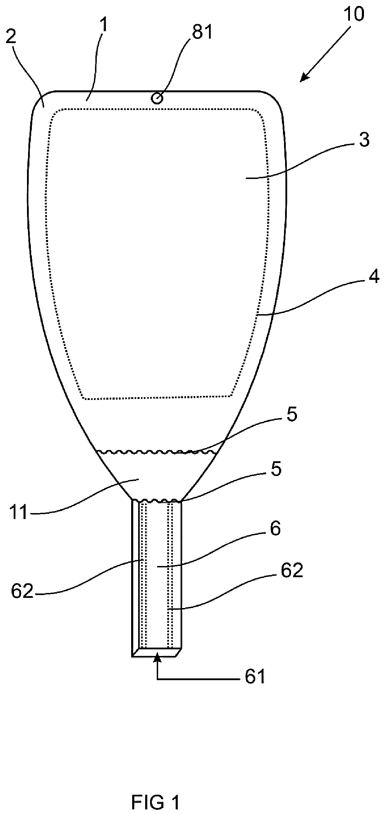

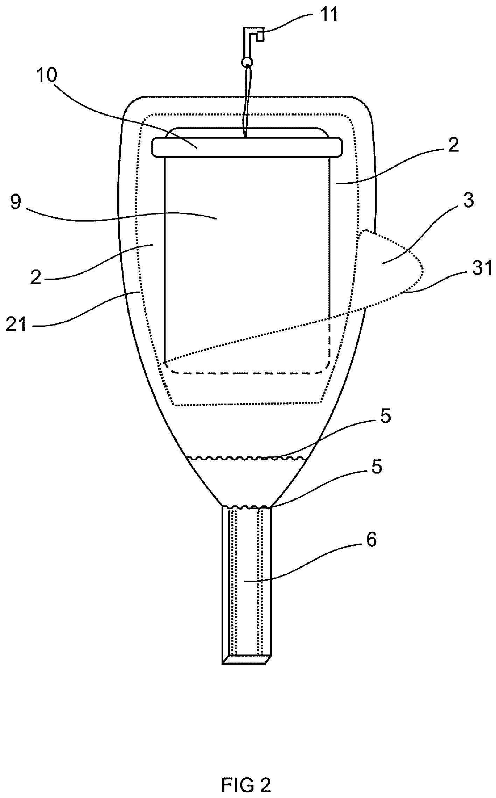

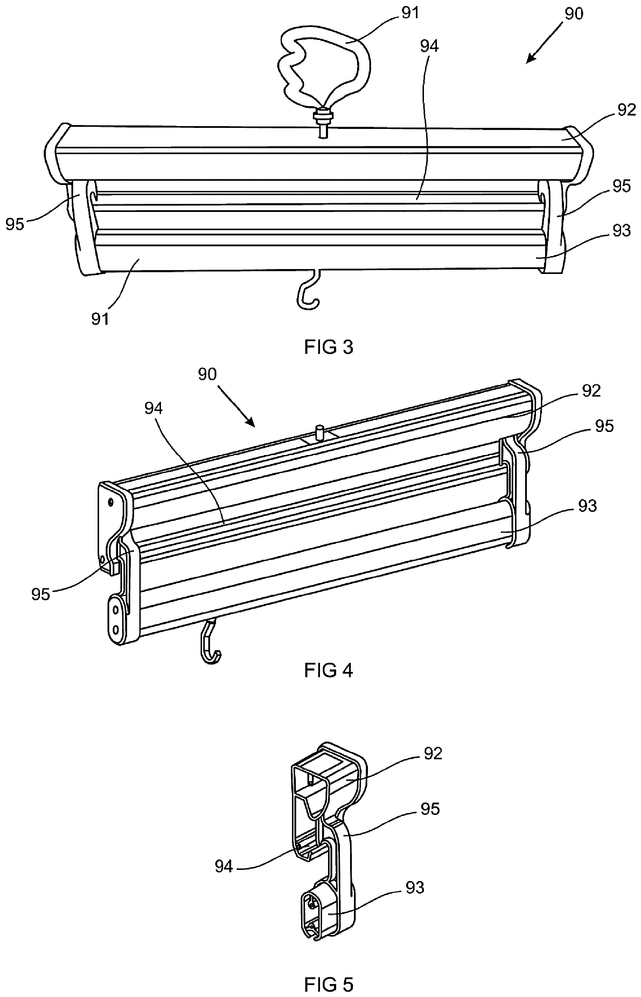

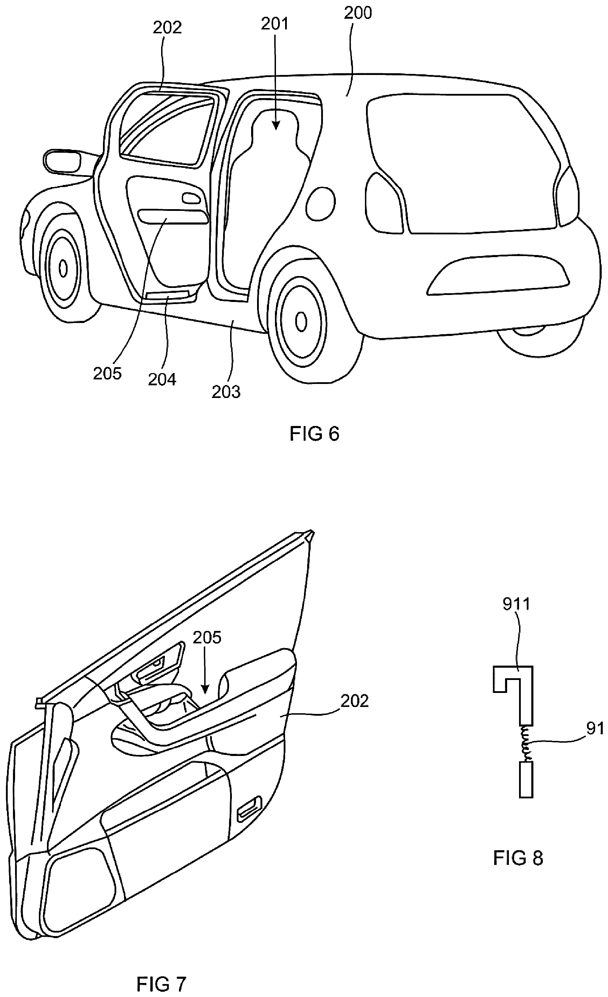

Figure 1 depicts the casing (1) and the drain sleeve (6), Figure 2 depicts the casing (1) when is opened, Figures 3 and 4 depict the hanger (90), Figure 5 is a cross sectional view of the hanger (90), Figure 6 depicts the car (200), Figure 7 depicts the car door (2020), and Figure 8 depicts the hanging element.

## Claims

1. An apparatus for hanging and drying a water suit within a passenger cabin of a car, comprising:
a casing,
a drain sleeve, and
an inner blocking mesh;
wherein the casing is configured to receive the water suit and comprises a front waterproof sheet and a back mesh sheet, connected to the front waterproof sheet along at least a peripheral portions of said sheets by a fastening means;
wherein the casing is configured to accommodate a hanger for hanging the water suit when the water suit is inside the casing, and wherein the hanger and the casing are suspended by a hanging strip that is designed to extent out of the casing through an upper hole;
wherein the drain sleeve is connected to a bottom portion of the casing and terminates in a bottom drain opening through which water and moisture can exit; wherein the drain sleeve is configured to be positioned between a passenger door of the car and the chassis of the car when the apparatus is in use; wherein the drain sleeve includes an inner element that is configured to create a gap between a sealing rubber of the passenger door and the chassis, enabling water and moisture to pass from the drain sleeve to outside the car through the bottom drain opening while the passengers door is closed;
wherein the inner blocking mesh is attached to the casing or to the drain sleeve to prevent parts of the water suit from falling into the drain sleeve, while enabling water and moisture to pass from the casing into the drain sleeve; wherein the prevention of water suits parts from entering the drain sleeve is designed to eliminate possibility of the passenger door failing to closed properly and to ensure unimpeded passage of water and moisture through the drain sleeve to the outside of the car.

2. The apparatus of claim 1, further comprising said hanger; wherein the hanger comprises an upper rod and lower rod; wherein the upper rod is configured to be connected to said hanging strip, used to suspend the apparatus within said passenger compartment, and includes a hanging rail; and wherein the lower rod includes hanging hooks that allow the lower rod to be hung on the hanging rail, enabling the user to remove the lower rod from the casing, place said water suit on the lower rod, and then hang the lower rod together with the water suit on the upper rod by attaching the hanging hooks to the hanging rail.

3. The apparatus of claim 1, wherein said hanging strip includes a hanging element that is configured to be hung on a vertical niche on the inner side of said passenger door.

4. A method for drying a wet water suit within a passenger cabin of a car, comprising:
(a) providing an apparatus for hanging and drying the water suit comprises a casing, a drain sleeve, and an inner blocking mesh;
wherein the casing is configured to receive the water suit and comprises a front waterproof sheet and a back mesh sheet, connected to the front waterproof sheet along at least a peripheral portions of said sheets by a fastening means;
wherein the casing is configured to accommodate a hanger for hanging the water suit when the water suit is inside the casing, and wherein the hanger and the casing are suspended by a hanging strip that is designed to extent out of the casing through an upper hole;
wherein the drain sleeve is connected to a bottom portion of the casing and terminates in a bottom drain opening through which water and moisture can exit; wherein the drain sleeve is configured to be positioned between a passenger door of the car and the chassis of the car when the apparatus is in use; wherein the drain sleeve includes an inner element that is configured to create a gap between a sealing rubber of the passenger door and the chassis, enabling water and moisture to pass from the drain sleeve to outside the car through the bottom drain opening while the passengers door is closed;
wherein the inner blocking mesh is attached to the casing or to the drain sleeve to prevent parts of the water suit from falling into the drain sleeve, while enabling water and moisture to pass from the casing into the drain sleeve;
wherein the prevention of water suits parts from entering the drain sleeve is designed to eliminate possibility of the passenger door failing to closed properly and to ensure unimpeded passage of water and moisture through the drain sleeve to the outside of the car;
(b) providing a hanging element configured to be hung on a vertical niche on an inner side of the passenger door; wherein the hanging element is connected to the hanging strip;
(c) placing the wet water suit on the hanger inside the casing,
(d) hanging the apparatus on the vertical niche on the inner side of the passenger door, and
(e) placing the drain sleeve between the passenger door and the chassis when the passenger door is opened and closing the passenger door on the drain sleeve.
